# EUROPEAN PATENT APPLICATION

(11) **EP 1 587 336 A1**
(43) Date of publication of application: **19.10.2005**
(21) Application number: 04290999.4
(22) Date of filing: 14.04.2004
(51) Int. Cl.: H04Q 7/34, H04Q 7/36, H04Q 7/38

(54) **A remote unit, an apparatus, a cellular communication system and method of operation therefor**

(71) Applicant: MOTOROLA, INC., Schaumburg, IL 60196 (US)
(72) Inventor: Al-Bakri, Ban, 06160 Juan Les Pins, Alpes Maritimes (FR); Andersen, Niels Peter, 4000 Roskilde (DK); Wong, Wilson, Rolling Meadows, Illinois 60008 (US)
(74) Representative: Jepsen, René Pihl

(57) **Abstract**

A remote unit (109) for a cellular communication system comprises a service processor (203) supporting a communication service. An interruption processor (207) detects service interruptions and if one is detected, a recovery processor (209) executes a recovery procedure. The remote unit (109) further comprises a restriction processor (211) that restricts the recovery procedure if a recovery procedure restriction indication is received from the base station (105). A network element (103) comprises a service support processor (301), which supports the communication service. The network element (103) also comprises a fault detector (303), which detects service interruptions, e.g. caused by a failure of a network element. A restriction indicator processor (305) transmits a recovery procedure restriction indication to the remote unit in this case. Hence, the network element controls the recovery procedure of the remote unit (109) and may prevent transmissions of recovery messages from the remote unit (109) thereby reducing the loading of the air interface and network interfaces.

## Description

### Field of the invention

The invention relates to a remote unit, an apparatus, a cellular communication system and a method of operation therefor and in particular to execution of recovery procedures.

### Background of the Invention

In a cellular communication system a geographical region is divided into a number of cells each of which is served by base station. The base stations are interconnected by a fixed network, which can communicate data between the base stations. A mobile station is served via a radio communication link by the base station of the cell within which the mobile station is situated.

As a mobile station moves, it may move from the coverage of one base station to the coverage of another, i.e. from one cell to another. As the mobile station moves towards base station, it enters a region of overlapping coverage of two base stations and within this overlap region it changes to be supported by the new base station. As the mobile station moves further into the new cell, it continues to be supported by the new base station. This is known as a handover or handoff of a mobile station between cells.

A cellular communication system extends coverage over typically an entire country and comprises hundreds or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition, the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Currently, the most ubiquitous cellular communication system is the 2nd generation communication system known as the Global System for Mobile communication (GSM). GSM uses a technology known as Time Division Multiple Access (TDMA) wherein user separation is achieved by dividing frequency carriers into 8 discrete time slots, which individually can be allocated to a user. A base station may be allocated a single carrier or a multiple of carriers. One carrier is used for a pilot signal that further contains broadcast information. This carrier is used by mobile stations for measuring of the signal level of transmissions from different base stations, and the obtained information is used for determining a suitable serving cell during initial access or handovers. Further description of the GSM TDMA communication system can be found in 'The GSM System for Mobile Communications' by Michel Mouly and Marie Bernadette Pautet, Bay Foreign Language Books, 1992, ISBN 2950719007.

To further enhance the services and performance of the GSM communication system, a number of enhancements and additions have been introduced to the GSM communication system over the years.

One such enhancement is the General Packet Radio System (GPRS), which is a system developed for enabling packet data based communication in a GSM communication system. Thus, the GPRS system is compatible with the GSM (voice) system and provides a number of additional services including provision of packet data communication, which augments and complements the circuit switched communication of a traditional communication system. Furthermore, the packet based data communication may also support packet based speech services. The GPRS system has been standardised as an add-on to an existing GSM communication system, and can be introduced to an existing GSM communication system by introducing new network elements. Specifically, a number of Serving GPRS Support Nodes (SGSN) and Gateway GPRS Support Nodes (GGSN) may be introduced to provide a packet based fixed network communication.

Another enhancement is the Enhanced Data rate for GSM Evolution (EDGE) system, which comprises an air interface transmission protocol using a number of techniques to provide higher throughput over the air interface. Specifically, EDGE utilises higher order modulation schemes (8-PSK modulation), channel adaptation, Automatic Repeat Request (ARQ) schemes and incremental redundancy to provide a high data throughput. Furthermore, EDGE is particularly suited for packet-based communication over the air interface.

In particular, a radio access network known as a GERAN (GSM/EDGE Radio Access Network) has been standardised. The GERAN allows for traditional GSM services to be provided as well as the enhanced services and performance provided by EDGE and GPRS.

Currently, 3rd generation systems are being rolled out to further enhance the communication services provided to mobile users. The most widely adopted 3rd generation communication systems are based on Code Division Multiple Access (CDMA) wherein user separation is obtained by allocating different spreading and scrambling codes to different users on the same carrier frequency. The transmissions are spread by multiplication with the allocated codes thereby causing the signal to be spread over a wide bandwidth. At the receiver, the codes are used to de-spread the received signal thereby regenerating the original signal. Each base station has a code dedicated for a pilot and broadcast signal, and as for GSM this is used for measurements of multiple cells in order to determine a serving cell. An example of a communication system using this principle is the Universal Mobile Telecommunication System (UMTS), which is currently being deployed. Further description of CDMA and specifically of the Wideband CDMA (WCDMA) mode of UMTS can be found in 'WCDMA for UMTS', Harri Holma (editor), Antti Toskala (Editor), Wiley & Sons, 1091, ISBN 0471486876.

In a UMTS CDMA communication system, the communication network comprises a core network and a UMTS Radio Access Network (UTRAN). The core network is operable to route data from one part of the RAN to another, as well as interfacing with other communication systems. In addition, it performs many of the operation and management functions of a cellular communication system, such as billing. The RAN is operable to support wireless user equipment over a radio link being part of the air interface. The RAN comprises the base stations, which in UMTS are known as Node Bs, as well as Radio Network Controllers (RNC) that control the Node Bs and the communication over the air interface.

Cellular communication systems have developed from being predominantly aimed at supporting two-way voice communication towards providing an increasing number of diverse services. For example, the uptake of data services, text messaging and image messaging has been significant in recent years and this trend is expected to continue.

It is essential that cellular communication systems provide services having a high degree of reliability. Efficient resource management of the diverse services is essential in order to maximise the use of the limited air interface resource. This is required not only to provide an increased capacity but also to minimise the number of dropped calls and interrupted services.

In order to increase the reliability, most services comprise means for recovering from a temporary disruption. Such a recovery procedure may for example include requesting retransmission of lost data packets or instigating new access requests.

Although these recovery processes in many cases increase reliability and allow services to continue, there are also a number of disadvantages associated with the recovery processes currently considered.

In particular, the recovery mechanisms are generally aimed at re-establishing a service in the event of a temporary and localised disruption - such as one caused by a degradation of the propagation conditions. However, for other kinds of disruptions, the recovery mechanisms may be counter productive and degrade the performance of the communication system as a whole.

For example, it is inevitable that faults may occur in elements of the network supporting a plurality of mobile stations, such as e.g. in an RNC. Such a fault may disrupt a shared or broadcast service thereby resulting in the mobile stations requesting retransmissions or transmitting new access messages. Due to the faulty network element, recovery is not possible and significant resources may be wasted on attempting to re-establish the services, thereby degrading other services and reducing the capacity of the communication system.

As a specific example, network failure may arise for example due to a fault developing in an MSC, SGSN or RNC. During the down time, the mobile stations will continue to transmit access requests or attach requests. Although the network may simply reject these requests, the high number of requests arising from a fault affecting a large number of mobile stations may result in for example the air interface or the Iub interface being congested.

Another example is the Multimedia Broadcast Multicast Service (MBMS) defined for UMTS and GPRS. MBMS is a point to point or point to multipoint service. In the point to multipoint mode, data may be simultaneously transmitted to a plurality of mobile stations. MBMS further provides for re-transmission requests being transmitted from mobile stations having lost data called MBMS data repair. These requests are point to point communications. In such a system, a fault (to e.g. an RNC) affecting a large number of mobile stations will cause a large number of repeated re-transmission requests to be initiated on point to point connections. This may cause congestion on the air interface and in the network interfaces thereby degrading other services and reducing the capacity of the communication system as a whole.

Hence, an improved cellular communication system and elements thereof would be advantageous and in particular a system providing increased flexibility, reduced resource use, increased control, improved services, improved reliability and/or improved performance would be advantageous.

### Summary of the Invention

Accordingly, the Invention seeks to preferably mitigate, alleviate or eliminate one or more of the above mentioned disadvantages singly or in any combination.

According to a first aspect of the invention there is provided a remote unit for a cellular communication system, the remote unit comprising: means for supporting a communication service over an air interface to a base station; means for detecting service interruptions to the communication service; means for executing a recovery procedure when a service interruption is detected; and means for restricting the recovery procedure if a recovery procedure restriction indication is received from the base station.

The invention may provide for different modes of recovery operations of a remote unit. Hence, the recovery procedures may be optimised for the current characteristics of the cellular communication system and in particular for the cause of the interruption of the communication service. The recovery procedure executed by the remote unit may be controlled by the network of the cellular communication system through the transmission of recovery procedure restriction indications. Specifically, the control may be an operator specific decision on how and when to provide the recovery procedure.

Specifically, the invention may provide for recovery procedures suitable for a normal operational status of the relevant parts of the cellular communication system to be restricted in conditions where these recovery procedures may be disadvantageous.

Accordingly, the invention may provide increased flexibility for the recovery procedures. The recovery operation of the remote unit may be improved e.g. resulting in reduced resource use and thus reduced air interface and/or network congestion.

According to a preferred feature of the invention, the means for restricting is operable to prevent the means for executing from executing the recovery procedure.

The invention may allow the network to control if remote units execute a recovery procedure. The feature may allow the network to switch the recovery procedure on and off depending on the suitability for the current conditions. For example, in an MBMS application, the network may transmit a recovery procedure restriction indication if a relevant network element fails thereby preventing retransmission requests. Hence, the disadvantageous consequences of performing recovery procedures in some conditions may be obviated or mitigated.

According to a preferred feature of the invention, the means for restricting is operable to restrict the transmission of recovery messages to the base station. This may reduce the congestion of the air interface and the network thus reducing resource usage thereof. However, other elements of a recovery procedure may be executed. The restriction of the transmission of recovery messages may be a limited or non-limited restriction.

According to a preferred feature of the invention, the means for determining is operable to restrict the number of recovery messages transmitted by the recovery procedure.

The means for determining may restrict any recovery message being sent but may also allow some recovery messages to be transmitted. Thus, the means for determining may allow recovery messages to be transmitted but e.g. only allow a fixed number of messages being transmitted or only with an increased time interval than for a non-restricted recovery restriction. This may allow the remote unit to execute a recovery procedure that still recovers the service, for example when a network fault is removed, while at the same time reducing the detrimental effect of the recovery procedure.

According to a preferred feature of the invention, the recovery messages comprise retransmission request messages. The invention may allow a practical and easy implementation of means for flexibly controlling the amount of retransmission request messages being transmitted during an interruption of a retransmission service. Specifically, the number of retransmission requests occurring in response to a network fault may be substantially reduced.

According to a preferred feature of the invention, the recovery messages comprise access request messages. The invention may allow a practical and easy implementation of means for flexibly controlling the amount of access request messages being transmitted during an interruption of a service. Specifically, the number of access request messages occurring in response to a network fault may be substantially reduced. The access request message may specifically be an attach request message.

According to a preferred feature of the invention, the apparatus further comprises means for receiving a system information message comprising the recovery procedure restriction indication.

System information messages may be information messages specified for the cellular communication system for transmitting information related to the status of the cellular communication system to the remote units. System information messages may be a particularly suitable means of transmitting recovery procedure restriction indications. For example, in many cellular communication systems such messages are transmitted and received for other purposes and thus no additional complexity increase of the remote unit is imposed. The system information message may for example for a UMTS cellular communication system be a MBMS specific SIB (system information Block), or e.g. any other SIB as specified in the technical specifications TS 25.331- Radio Resource Control and TS 25.346 Introduction of the Multimedia Broadcast Multicast Service in the Radio access Network.

According to a preferred feature of the invention, the system information message comprises a flag for indicating the recovery procedure restriction indication. This provides a particularly simple and low resource demand means of communicating recovery procedure restriction indications. The flag may for example consist in a predetermined bit position of the system information message.

According to a preferred feature of the invention, the remote unit further comprises means for receiving in-band signalling comprising the recovery procedure restriction indication.

This provides for a suitable means of communicating the recovery procedure restriction indication in many applications and may specifically mitigate or obviate the requirement for dedicated channels or messages. The impact on other logical or physical channels may be reduced. For example, the recovery procedure restriction indication may be communicated by including information in a user data channel associated with the communication service. For example, for an MBMS application, the recovery procedure restriction indication may be communicated in the MBMS Traffic CHannel (MTCH). Specifically, the recovery procedure restriction indication can be sent as a separate packet or in the headers of other packets such as a MAC header or RLC header or MBMS specific header

According to a preferred feature of the invention, the remote unit further comprises means for receiving a control channel comprising the recovery procedure restriction indication.

This provides for a suitable means of communicating the recovery procedure restriction indication suitable for many applications. For example, the recovery procedure restriction indication may be communicated in an MBMS Control CHannel (MCCH) of a UMTS communication system. Specifically, the recovery procedure restriction indication may be sent as a separate packet/message or e.g. in MAC headers or RLC headers or MBMS specific headers of other packets.

According to a preferred feature of the invention, the remote unit further comprises means for receiving a broadcast channel comprising the recovery procedure restriction indication.

This provides for a suitable means of communicating the recovery procedure restriction indication suitable for many applications and in particular provides for an efficient communication of the recovery procedure restriction indication to a large number of remote units. For example, the recovery procedure restriction indication may be communicated in a BCCH (Broadcast Control CHannel) of a GSM or UMTS communication system.

According to a preferred feature of the invention, the remote unit comprises means for receiving a recovery procedure restriction indication in advance of the service interruption.

This may provide for increased flexibility and control of recovery procedures to suit the current conditions. For example, the recovery procedure restriction indication may be transmitted in congested cells thereby preventing e.g. retransmissions or repeated access requests when cell loading is critical. Hence, a trade off between the recovery performance of the communication service and the impact on the cellular communication system may be dynamically controlled by the network.

According to a preferred feature of the invention, the communication service is a point to multipoint service and preferably the recovery procedure comprises a point to point communication from the remote unit.

The invention thus allow for the effective control of recovery procedures of remote units supporting a point to multipoint service. Point to point communication typically requires a significantly higher average resource per remote unit than a point to multipoint service and accordingly the recovery procedure of a point to multipoint communication may have a disproportionately disadvantageous effect. However, this may effectively be controlled in accordance with the feature.

According to another aspect of the invention, there is provided an apparatus for a network of a cellular communication system, the apparatus comprising: means for supporting a communication service over an air interface to a remote unit; means for detecting service interruptions to the communication service; and means for transmitting a recovery procedure restriction indication to the remote unit if a service interruption is detected.

It will be appreciated that the advantages and preferred features described with respect to an application of the inventive concept to a remote unit may equally be applied to the apparatus as appropriate.

Hence, the invention may provide for a network of a cellular communication system to control different modes of recovery operations of remote units. Thereby the recovery procedures may be optimised for the current characteristics of the cellular communication system.

Specifically, the invention may provide for recovery procedures suitable for a normal operational status of the relevant parts of the cellular communication system to be restricted in conditions where these recovery procedures may be disadvantageous. Accordingly, the invention may provide increased flexibility for the recovery procedures e.g. resulting in reduced resource use and thus reduced air interface and/or network congestion.

The apparatus may be a single network element such as an RNC, BTS or SGSN or may e.g. be a combination of network elements.

According to a preferred feature of the invention, the means for detecting is operable to detect the service interruption in response to a characteristic of a communication from a network element of the fixed network. Specifically, the means for detecting may be operable to detect the service interruption in response to an absence of a communication from a network element of the fixed network.

This may allow a functioning network element to detect that a fault has occurred in another network element and accordingly restrict the recovery procedures of remote units thus reducing the impact of the network element failure.

According to a preferred feature of the invention, the means for detecting is operable to detect the service interruption in response to a received fault indication associated with a network element of the fixed network. This may provide an accurate and reliable fault indication. For example, a network element may on detecting a fault transmit a fault indication to the apparatus causing this to restrict the recovery procedures of remote units thereby reducing the impact of the network element failure.

According to a preferred feature of the invention, the apparatus further comprises fault detection means and the means for detecting is operable to detect the service interruption in response to the fault detection means detecting a fault of the apparatus.

This may allow the apparatus itself to detect a fault and in response restrict the recovery procedures of remote units thereby reducing the impact of the network element failure.

According to another aspect of the invention, there is provided a network for a cellular communication system comprising the apparatus hereinabove described.

According to another aspect of the invention, there is provided a cellular communication system comprising a network as hereinabove described and at least one remote unit as hereinabove described.

Preferably, the cellular communication system is a 3^{rd} Generation communication system, such as e.g. a UMTS communication system, and/or a GSM communication system. The term GSM communication system includes GPRS and/or EDGE communication systems and may specifically include a GERAN.

According to a preferred feature of the invention, the communication service is an MBMS service.

According to another aspect of the invention, there is provided a method of operating a remote unit of a cellular communication system; the method comprising the steps of: supporting a communication service over an air interface to a base station; detecting service interruptions to the communication service; executing a recovery procedure when a service interruption is detected; and restricting the recovery procedure if a recovery procedure restriction indication is received from the base station.

According to another aspect of the invention, there is provided method of operation for an apparatus of a network of a cellular communication system, the method comprising the steps of: supporting a communication service over an air interface to a remote unit; detecting service interruptions to the communication service; and transmitting a recovery procedure restriction indication to the remote unit if a service interruption is detected.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a simplified block diagram of a UMTS communication system supporting an MBMS service;
FIG. 2 is an illustration of a remote unit in accordance with an embodiment of the invention; and
FIG. 3 illustrates an apparatus for a network of a cellular communication system in accordance with an embodiment of the invention.

### Detailed Description of a Preferred Embodiment of the Invention

The following description focuses on an embodiment for a UMTS communication system supporting MBMS (Multimedia Broadcast Multicast Service) in the point to multipoint mode but it will be apparent that the invention is not limited to this application but may be applied to many other services and communication systems.

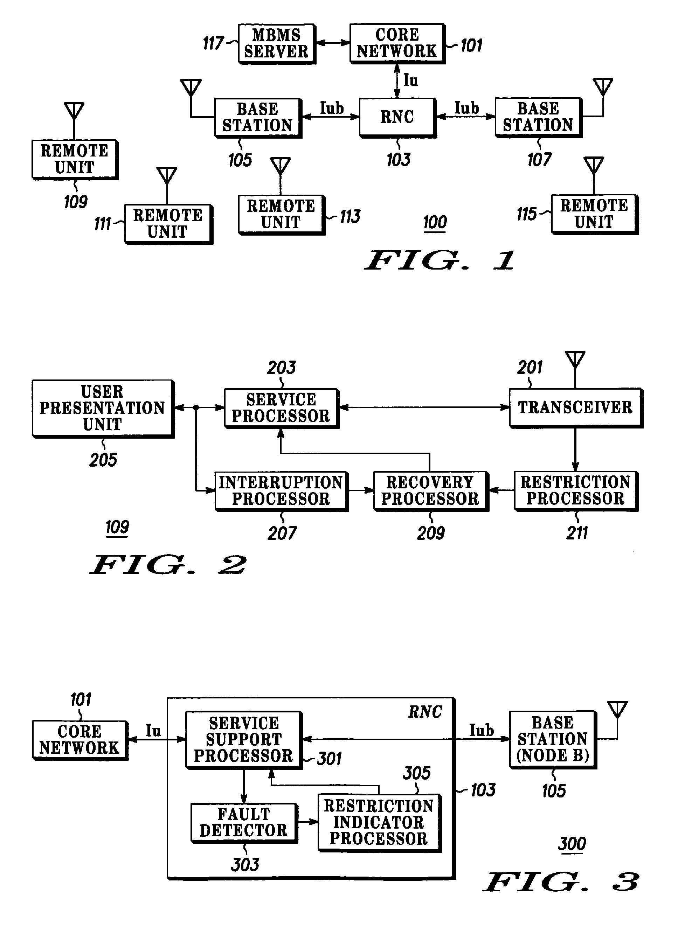

FIG. 1 illustrates a simplified block diagram of a UMTS communication system supporting an MBMS service. For brevity and clarity only the aspects necessary for the description of the embodiment has been included in FIG. 1 as will be clear to the person skilled in the art.

The UMTS communication system 100 comprises a core network 101. The core network 101 routes data, interfaces with other communication systems, performs operation and management functions, etc. as is well known in the art.

The core network 101 is coupled to an RNC 103, which is coupled to two base stations 105 and 107. The RNC 103 performs many of the control functions related to the air interface including radio resource management and routing of data to and from the base stations 105, 107. The RNC 103 also provides the interface between the Radio Access Network (RAN) and the core network 101. Each of the base stations 105 and 107 forms a cell of the cellular communication system and supports communication to and from remote units 109-115. In the example of FIG. 1, three remote units 109-113 supported by a first base station 105 and one remote unit 105 supported by a second base station 107 are shown.

A remote unit may typically be a subscriber unit, wireless user equipment, a mobile station, a communication terminal, a personal digital assistant, a laptop computer, an embedded communication processor or any other communication element communicating with a base station over the air interface.

The UMTS communication system 100 further comprises an MBMS server 117 coupled to the core network 101. The MBMS server 117 interfaces with the core network to provide an MBMS service to some of the remote units of the UMTS communication system in accordance with the requirements and specifications for the MBMS services.

Furthermore, the individual remote units may setup an MBMS service with the MBMS service in accordance with the specified procedures as is well known to the person skilled in the art. In the example of FIG. 1, the four remote units 109-115 have accessed the same MBMS service. The MBMS service may further be provided to a number of other remote units in the cells supported by the base stations 105 and 107 or in other cells.

Any suitable MBMS service may be provided. For example, the MBMS server may provide streaming text or voice such as for example a streaming commentary of a sports event.

The MBMS service is a point to multipoint service wherein the same data is communicated to a plurality of remote units. For example, the same streaming commentary is simultaneously provided to all of the illustrated remote units 109-115.

The point to multipoint nature of the MBMS service provides for a highly efficient communication. Thus, only a single data stream is routed from the MBMS server to the RNC 103 through the core network 101. Thus, the RNC 103 receives only a single data stream for all the remote units managed by the RNC 103 and accessing the MBMS service.

The RNC 103 routes the MBMS data to each of the base stations 105 and 107 supporting remote units 109-115 that are accessing the MBMS service. The base stations 105 and 107 then proceed to transmit the MBMS data to the appropriate remote units 109-115. A resource efficient communication over the air interface is further achieved by broadcasting the MBMS data to all the remote units subscribing to the MBMS service.

Thus, the MBMS service provides a very efficient way of providing the same service to a plurality of remote units. However, the remote units 109-115 may not always receive the MBMS data without error and therefore MBMS provides for the remote units to implement a recovery procedure that will allow it to recover lost data. This recovery procedure is known as "repair" for MBMS.

Specifically, following loss of data, a remote unit may request a retransmission of this data. MBMS data is organised in data sessions and the remote unit may request that a session is repeated. However, as a large number of remote units may be supported by an MBMS service, the repair procedure uses point to point communication in order to minimise the impact of retransmissions. Thus, the retransmission request is associated with the individual remote unit and will result in a retransmission of the lost data on an individual channel.

Accordingly, MBMS provides for an efficient and shared MBMS service provision and an individual data loss recovery or repair procedure. This provides efficient performance for individual short-term temporary data loss such as that caused by a given remote unit's individual propagation conditions.

However, if a fault occurs in a centralised or common element, this recovery procedure may be disadvantageous and have a detrimental effect on other services and the communication system as a whole.

For example, if the MBMS server 117, the core network 101 or the RNC 103 develops a fault, this may cause the MBMS data stream to be interrupted such that none or only some of the remote units receive the data stream. However, this will cause the remote units to instigate the recovery or repair procedure and to request retransmission. This will result in a large number of retransmission requests which may congest not only the air interface but alternatively or additionally may also congest the network including for example the Iub interface between the base station and the RNC.

Hence, in this situation the recovery procedures of the remote units may cause a degradation of the performance of the communication system and may have a detrimental effect on other services.

In accordance with the described embodiment, the network is capable of controlling the recovery procedures of the remote units. Specifically, a network element may cause a recovery procedure restriction indication to be transmitted to the remote units. When the remote units receive the recovery procedure restriction indication, they restrict the recovery procedure and specifically they may cease to transmit any retransmission requests. Thus, the degradation of the performance of the communication system by the recovery procedure may be mitigated or obviated in some situations without impacting the benefit of the recovery procedure during normal operation.

FIG. 2 is an illustration of a remote unit in accordance with an embodiment of the invention. The remote unit may specifically be the remote unit 109 of FIG. 1 and will be described with reference to this.

The remote unit 109 comprises a transceiver 201 for communicating with a serving base station 105. The transceiver 201 is operable to perform all the functionality required or desired for communicating with the base station 105 including functionality for power control, modulation, timing, organising data into physical and logical channels etc as is well known in the art.

The transceiver 201 is further coupled to a service processor 203, which together with the transceiver 201 is capable of supporting a communication service over the air interface to the base station. Specifically, the service processor 203 performs the functionality for setting up, maintaining and closing down an MBMS service. The service processor 203 generates user data, which is fed to a user presentation unit 205 that presents the information in a suitable way. For example, for streaming audio commentary the user presentation unit 205 may drive a speaker and for streaming text the user presentation unit 205 may drive a suitable display.

The remote unit 109 further comprises an interruption processor 207 which detect service interruptions to the communication service. It will be appreciated that the interruption processor 207 may use any suitable algorithm or criterion for detecting an interruption.

For example, the service processor 203 (and/or the transceiver 201) may determine if a data packet or session has not been correctly received by performing an error detection algorithm. For example, the transceiver may perform CRC (Cyclic Redundancy Checks) on received data and set an indication if a data packet does not pass the CRC check. The service processor 203 may determine that an interruption has occurred if too many data packets are received in error within a given time interval.

Alternatively or additionally, the service processor 203 may extract data packet numbers from received data packets and determine that an interruption has occurred if a given number of data packets have been missed.

The interruption processor 207 is coupled to a recovery processor 209. When the interruption processor 207 detects an interruption, it sends a control message to the recovery processor 209 thereby causing this to control the service processor 203 (and through this the transceiver 201) to perform a recovery procedure.

In the described embodiment, the normal recovery procedure specified for an MBMS service may be performed. Thus, in response to a detection of an interruption of a service, the remote unit 201 may begin to transmit retransmission requests to the MBMS server on a point to point communication link. The retransmission is instigated by the request being transmitted to the base station and from there a request is routed through the RNC and the core network to the MBMS server.

The remote unit 109 of the described embodiment further comprises a restriction processor 211 that is coupled to the transceiver 201. The restriction processor 211 is operable to detect if the base station 105 transmits a recovery procedure restriction indication. Thus, the restriction processor 211 may through the transceiver 201 monitor suitable transmissions from the base station to determine if a recovery procedure restriction indication is transmitted.

The restriction processor 211 is further coupled to the recovery processor 209 and if it detects a recovery procedure restriction indication from the base station it controls the recovery processor 209 to restrict the recovery procedure.

In a simple embodiment, the restriction of the recovery procedure may simply consist in abandoning an ongoing recovery procedure or in preventing a new recovery procedure from instigating. Thus, the remote unit 109 will cease to transmit any retransmission requests when a recovery procedure restriction indication is received even if the MBMS service continues to be interrupted. This may reduce the resource use and congestion of the air interface and network interfaces. Thus, the recovery performance of the remote unit may be controlled by the network thereby allowing the network to optimise the network performance and to flexibly control the performance and reliability of the provided services.

FIG. 3 illustrates an apparatus for a network 300 of a cellular communication system in accordance with an embodiment of the invention. In the embodiment, the apparatus is specifically part of the RNC 103 of FIG. 1. As described with reference to FIG. 1, the RNC 103 is coupled to a core network 101 and a base station 105 through which it supports an MBMS service for a plurality of remote units including the remote unit 109 of FIG. 2.

Specifically, the RNC 103 comprises a service support processor 301 that supports the MBMS service. The RNC 103 receives the MBMS data from the MBMS server 117 through the core network 101 and distributes it to the base stations 105, 107 supporting remote units 109-115 accessing the service.

The RNC 103 further comprises a fault detector 303 that detects if an interruption has occurred to the MBMS service. For example, the fault detector 303 may detect that a fault has occurred in the RNC itself 103 or that no MBMS data is received from the core network 101.

Thus, in the embodiment, the fault detector 303 detects if a fault has arisen that will result in the MBMS service being interrupted to a large number of remote units and possibly for a significant duration.

The fault detector 303 is coupled to a restriction indicator processor 305. When a fault is detected, the restriction indicator processor 305 proceeds to control the RNC 103, and, in the specific embodiment, the service support processor 301, to transmit a recovery procedure restriction indication to the remote units accessing the MBMS service. The transmission is effectuated by the recovery procedure restriction indication being routed to the base stations 105and 107, and transmitted by these over the air interface.

Thus, if a fault occurs that prevents the network 300 from supporting the MBMS service (typically affecting all remote units for a significant time), the RNC 103 causes a recovery procedure restriction indication to be transmitted to the remote units 109-115. As described with reference to remote unit 109, this results in a restricted recovery operation and may specifically result in the remote units not transmitting any retransmission requests. As these retransmissions, due to the fault status, typically cannot be performed, the performance of the individual remote unit is not affected by this. Furthermore, the recovery performance of the remote units during normal operation, where no recovery procedure restriction indication is transmitted, is not affected. However, preventing retransmission requests being generated by a large number of MBMS remote units allows for a significant reduction of resource use of the air interface and the network interface and may specifically prevent congestion of the air interface and the network interfaces, such as the Iub interface.

It will be appreciated that different restrictions of the recovery procedure may be implemented in different embodiments.

For example, in the embodiment described above, the recovery procedure is restricted by preventing the execution of the recovery procedure. This may be achieved by either abandoning an ongoing recovery procedure when the recovery procedure restriction indication is received or by preventing the recovery procedure from starting if a recovery procedure restriction indication has already been received.

In other embodiments the restriction of the recovery procedure may be less severe. For example, in some embodiments, the restriction processor 211 may simply restrict the recovery processor 209 from causing the service processor 203 to make any retransmission requests but otherwise allowing it to perform the normal recovery operations. These non-restricted recovery operations may for example include monitoring for other base stations, performing hand-overs, muting the data output, etc.

Furthermore, in some embodiments, the restriction processor 211 may not completely restrict the transmission of retransmission requests but only reduce the number of retransmission requests that are transmitted to the network.

For example, when in normal recovery mode, the remote unit may transmit retransmission requests with a given frequency, but when a recovery procedure restriction indication is received this frequency may be reduced, resulting in an increased time interval between retransmission requests. This will reduce the air interface and network interface congestion while still allowing the service to potentially recover through the use of retransmissions.

In some embodiments, the recovery procedure restriction indication may only be transmitted after an interruption has been detected. However, in some embodiments, the remote units may be capable of receiving a recovery procedure restriction indication in advance of the service interruption.

For example, if during normal operation, a recovery procedure restriction indication is received, the restriction processor 211 may set the recovery processor 209 to a state wherein no recovery procedure is started if an interruption occurs.

Hence, the network may control the recovery operation of the remote unit and may specifically prevent future transmissions of retransmission requests. This may be advantageous for example in the case of a cell being congested. The network may prevent retransmission requests further congesting the cell and may thereby reduce the quality of service for the MBMS service to provide improved service in the cell as a whole.

In some embodiments, the network may furthermore be arranged to send a recovery procedure restriction termination indication when e.g. the interruption has been terminated. Upon receipt of the recovery procedure restriction termination indication, the remote unit may restore normal recovery operation allowing the normal recovery procedure and in particular allowing transmission of retransmission requests.

In other embodiments a termination of the restricted recovery procedure operation may caused by an autonomous decision by the remote unit, for example in response to the restriction operation having lasted for a given duration. Also the recovery procedure restriction indication may itself be used to indicate a termination of the restricted recovery operation. For example, when normal operation has resumed, the recovery procedure restriction indication may be removed or turned off in the concerned messages.

It will be appreciated that any suitable algorithm or criterion for detecting service interruptions in the remote unit or the network may be used without detracting from the invention.

Specifically, the network may be able to detect an interruption caused by a fault occurring in the network.

In one embodiment, the RNC 103 comprises fault detection circuitry for detecting faults in the RNC 103 itself. Fault detection for network elements is well known and RNCs typically comprise significant fault detection and self-diagnosis circuitry. Thus, if this fault detection circuitry detects that a fault has occurred that will affect the MBMS service, the RNC proceeds to transmit the recovery procedure restriction indication.

As a specific example, an RNC is typically implemented by a number of modules each providing a subset of the functions required by the RNC. Some modules may typically be duplicated in order to provide an increased capacity. One module may comprise self-diagnosis / fault detection circuitry which monitors the status of the other modules. For example, the fault detection circuitry may receive a status message from the other modules at regular intervals, and if status messages cease to arrive from a specific module it may be determined that this module has failed. If the failed module is one that supports the MBMS service, the RNC may proceed to generate and transmit the recovery procedure restriction indication.

Alternatively or additionally, the RNC may also detect faults in other network elements, such as in the MBMS server or an SGSN of the core network. In one embodiment, the RNC may detect a fault in response to a characteristic of a communication from a network element of the fixed network. For example, if no data packets have been received from a given SGSN within a suitably long time interval, this may indicate that the SGSN has failed and if the SGSN supports the MBMS service (for example by providing the interface to the MBMS server) a recovery procedure restriction indication is generated and transmitted.

In a more advanced embodiment, the RNC may detect the service interruption in response to a received fault indication associated with a network element of the fixed network. For example, a network element may comprise self-diagnosis functionality. If the network element detects a fault impacting the MBMS service but still allowing communication with the RNC, it may transmit a fault indication to the RNC thereby indicating that a fault has been detected. In response, the RNC may generate and transmit the recovery procedure restriction indication.

It will be appreciated that any suitable way of communicating the recovery procedure restriction indication to the remote units may be applied without detracting from the invention,

In particular, communication systems, such as UMTS, transmit system information messages comprising information related to the status of the communication system. Specifically, the UMTS technical specification TS25.331 Radio Resource Control specifies messages transmitted on the Broadcast channel for transmission of system information.

Preferably, the system information message may comprise the recovery procedure restriction indication. In particular, a bit of the system information message may be used as a flag indicating whether a recovery procedure restriction indication is sent or not. Hence, for each transmission of a system information message, the network may determine if a service interruption is detected and if so set the bit to indicate a recovery procedure restriction indication and otherwise reset the bit to indicate that no recovery procedure restriction indication is transmitted. When receiving the system information message, the remote unit simply detects if the bit is set and if so the recovery procedure is restricted.

Alternatively or additionally, the recovery procedure restriction indication may also be transmitted as in-band signalling. For example, the user data of an MBMS service in a UMTS communication system is transmitted on the MBMS Traffic CHannel (MTCH). In some embodiments, the recovery procedure restriction indication may also be transmitted in this channel. For example, the header of transmitted data packets may comprise a flag indicating whether a recovery procedure restriction indication is transmitted and the remote unit may for each new header evaluate if it comprises a recovery procedure restriction indication and if so restrict the recovery procedure.

More complex ways of providing in-band signalling may also be used. For example, a recovery procedure restriction indication may be transmitted by changing a number of user data bits of low significance into a predetermined pattern. The remote may monitor the received user data and if the predetermined pattern is detected, the recovery procedure is restricted. Although such bit stealing may degrade the user data, this is often insignificant and will only occur rarely. The bit stealing may for example occur in the physical layer.

The recovery procedure restriction indication may also be communicated using a control channel, such as for example the MBMS Control CHannel (MCCH) of a UMTS communication system. This provides a practical means of communicating the recovery procedure restriction indication that does not increase the complexity of the remote units, as the MCCH must be decoded anyway. It furthermore allows the user data and recovery procedure restriction indication to be separated such that an interruption to the MTCH does not prevent the recovery procedure restriction indication from being transmitted and received.

As another example, the recovery procedure restriction indication may be communicated using a broadcast channel such as the BCCH channel for a UMTS communication system. This may be particularly useful as a common transmission of the recovery procedure restriction indication may reach all remote units in a cell by a single broadcast.

The above description has been directed to a UMTS communication system. However, the invention is equally applicable to many other communication systems such as a GSM communication system including a GPRS EDGE communication system. Specifically, the Radio Access Network may be a UTRAN, as described above, or may be a GERAN. The application of the principles described with reference to a UMTS communication system may readily be transferred to a GSM communication system. For example, the described functionality of the RNC may be applied to a Base Station Controller (BSC) of a GSM communication system.

The above description has focussed on an embodiment wherein the transmission of recovery messages in the form of retransmission request messages are controlled by transmission of a recovery procedure restriction indication from the network. However, it will be appreciated that in other embodiments other recovery procedures and other recovery messages may be employed.

For example, for some communication services, the recovery procedure comprises repeatedly transmitting access requests, such as RACH (Random Access CHannel) requests for a UMTS communication system, until the service has been re-established. However, if for example an MSC or SGSN fails, the communication service cannot be supported and the RNC therefore continues to deny the access request. This repeated access request / denial communication may cause congestion of the air interface and results in a significant message exchange between the RNC and the base station thereby significantly loading and possibly congesting the Iub interface.

By transmitting a recovery procedure restriction indication, the network may control the access request operation of the remote units. For example, a remote unit may cease transmitting access requests when it receives the recovery procedure restriction indication. Hence, similarly to the embodiment described for the MBMS service, the RNC may manage the air interface and Iub interface load during system failure.

It will be appreciated that the above description for clarity has described embodiments of the invention with reference to different functional units and modules. However, it will be apparent that this separation and distribution of functionality is simply provided for clarity of description and does not imply any specific implementation. Hence, references to specific functional units are only to be seen as references to suitable means for providing the described functionality rather than indicative of a strict logical or physical structure, organisation or separation.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A remote unit for a cellular communication system, the remote unit comprising:
means for supporting a communication service over an air interface to a base station;
means for detecting service interruptions to the communication service;
means for executing a recovery procedure when a service interruption is detected; and
means for restricting the recovery procedure if a recovery procedure restriction indication is received from the base station.

2. A remote unit as claimed in claim 1 wherein the means for restricting is operable to prevent the means for executing from executing the recovery procedure.

3. A remote unit as claimed in claim 1 wherein the means for restricting is operable to restrict the transmission of recovery messages to the base station.

4. A remote unit as claimed in claim 3 wherein the means for restricting is operable to restrict the number of recovery messages transmitted by the recovery procedure.

5. A remote unit as claimed in claims 3 or 4 wherein the recovery messages comprise retransmission request messages.

6. A remote unit as claimed in any of the claims 3 to 5 wherein the recovery messages comprise access request messages.

7. A remote unit as claimed in any of the previous claims further comprising means for receiving a system information message comprising the recovery procedure restriction indication.

8. A remote unit as claimed in claim 7 wherein the system information message comprises a flag for indicating the recovery procedure restriction indication.

9. A remote unit as claimed in any of the previous claims further comprising means for receiving in-band signalling comprising the recovery procedure restriction indication.

10. A remote unit as claimed in any of the previous claims further comprising means for receiving a control channel comprising the recovery procedure restriction indication.

11. A remote unit as claimed in any of the previous claims further comprising means for receiving a broadcast channel comprising the recovery procedure restriction indication.

12. A remote unit as claimed in any previous claim wherein the remote unit comprises means for receiving a recovery procedure restriction indication in advance of the service interruption.

13. A remote unit as claimed in any previous claim wherein the communication service is a point to multipoint service.

14. A remote unit as claimed in claim 13 the recovery procedure comprises a point to point communication from the remote unit.

15. An apparatus for a network of a cellular communication system, the apparatus comprising
means for supporting a communication service over an air interface to a remote unit;
means for detecting service interruptions to the communication service; and
means for transmitting a recovery procedure restriction indication to the remote unit if a service interruption is detected.

16. An apparatus as claimed in claim 15 wherein the means for detecting is operable to detect the service interruption in response to a characteristic of a communication from a network element of the fixed network.

17. An apparatus as claimed in claim 15 or 16 wherein the means for detecting is operable to detect the service interruption in response to a received fault indication associated with a network element of the fixed network.

18. An apparatus as claimed in claim 15 or 16 wherein the apparatus further comprises fault detection means and the means for detecting is operable to detect the service interruption in response to the fault detection means detecting a fault of the apparatus.

19. A network for a cellular communication system comprising the apparatus of any of the claims 15 to 18.

20. A cellular communication system comprising a network as claimed in claim 19 and at least one remote unit as claimed in any of the claims 1 to 14.

21. A remote unit as claimed in any of the claims 1 to 14 or an apparatus as claimed in claim 15 to 18 wherein the cellular communication system is a 3^{rd} Generation communication system.

22. A remote unit as claimed or an apparatus as claimed in claim 21 wherein the communication service is an MBMS service.

23. A remote unit as claimed in any of the claims 1 to 14 or an apparatus as claimed in claim 15 to 18 wherein the cellular communication system is a GSM communication system.

24. A method of operating a remote unit of a cellular communication system; the method comprising the steps of:
supporting a communication service over an air interface to a base station;
detecting service interruptions to the communication service;
executing a recovery procedure when a service interruption is detected; and
restricting the recovery procedure if a recovery procedure restriction indication is received from the base station.

25. A method of operation for an apparatus of a network of a cellular communication system, the method comprising the steps of:
supporting a communication service over an air interface to a remote unit;
detecting service interruptions to the communication service; and
transmitting a recovery procedure restriction indication to the remote unit if a service interruption is detected.

26. A computer program enabling the carrying out of a method according to claim 24 or 25.

27. A record carrier comprising a computer program as claimed in claim 26.

28. A remote unit for a cellular communication system, substantially as hereinbefore described with reference to the accompanying drawings.

29. An apparatus for a network of a cellular communication system, substantially as hereinbefore described with reference to the accompanying drawings.
